# EUROPEAN PATENT SPECIFICATION

(11) **EP 4 212 858 B1**
(45) Date of publication and mention of the grant of the patent: **01.10.2025**
(21) Application number: 23150839.1
(22) Date of filing: 10.01.2023
(51) Int. Cl.: G01N 21/84, B67C 3/00

(54) **INSPECTION DEVICE**
INSPEKTIONSVORRICHTUNG
DISPOSITIF D'INSPECTION

(30) Priority: 11.01.2022 JP 2022002208
(43) Date of publication of application: 19.07.2023
(73) Proprietor: Suntory Holdings Limited, Osaka 530-8203 (JP)
(72) Inventor: MORITA, Satoshi, Kyoto, 617-8530 (JP)
(74) Representative: Vossius & Partner Patentanwälte Rechtsanwälte mbB

(56) References cited:
- EP-A1- 0 744 224
- EP-A1- 2 808 291
- JP-B2- 6 869 054
- US-A1- 2016 257 437
- US-A1- 2019 242 831

## Description

### Technical Field

The present invention relates to an inspection device configured to inspect a filler device.

### Background Art

Factories for production of liquid products such as beverages commonly use a filler device including a circular rotor drivable to rotate and a plurality of filler machines arranged along the perimeter of the rotor. Filler devices of that type are typically configured such that the rotation of the rotor causes the filler machines to revolve along a track and that during the revolution, the filler machines each repeat the sequence of receiving an empty container from the preceding step, filling the empty container with beverage liquid, and transferring the filled container to the next step.

A defect in any one of the filler machines may let the filler machine continue to produce a defective liquid product in every revolution. This necessitates identifying any defective filler machine and taking a measure such as repairing or replacing the filler machine identified. International Publication No. 2016/114062 (Patent Literature 1), for example, discloses a filling and sealing apparatus configured to carry products with use of a turret. The filling and sealing apparatus utilizes the turret carriage to associate (i) the inspection result about the amount of liquid with which each product is filled with (ii) the filler machine that has filled the product. This allows identification of the filler machine that has caused an abnormality in the amount of liquid with which a product is filled. Patent Literature 2 discloses a diagnostic method for a container processing machine.

### Citation List

Patent Literature 1: WO 2016/114062
Patent Literature 2: US 2016/257437 Al

Patent Literature 1
International Publication No. 2016/114062

### Summary of Invention

### Technical Problem

The technique of Patent Literature 1 does not allow detection of a defect that involves no abnormality in the amount of liquid with which a product is filled; the filling and sealing apparatus is not designed to detect such defects as a loss or discoloring of a component of a filler machine or adherence of foreign matter on a filler machine. The filler machines each include some parts so attached as to potentially come off and enter the liquid product when defective. At some factories, a worker visually checks all such parts every day to prevent their entry into products. There has been a demand for reducing the inspection effort.

There has thus been a demand for an inspection device configured to easily and comprehensively determine whether a filler device has any visually recognizable abnormality.

### Solution to Problem

An inspection device according to the present invention is defined in the independent claim. It is an inspection device configured to inspect a filler device, the filler device including: a circular rotor drivable to rotate; a filling control device configured to control operation of the rotor; and a plurality of filler machines arranged along a perimeter of the rotor, the inspection device including: an image capture device configured to capture an image of each of the plurality of filler machines to generate image data; an image capture control device configured to control the image capture device; and a computing device configured to realize an inspection function to inspect the filler device based on the image data, wherein the image capture control device, based on coordinate data on rotating coordinates of the rotor from the filling control device, selects a time point at which the image capture device is to generate the image data.

With the above configuration, the computing device inspects the filler device based on image data generated by the image capture device capturing an image of each filler machine. This reduces human inspection. The above configuration also generates image data associated with the rotation of the rotor of the filler device. This facilitates identifying a filler machine of interest in response to detecting a defect. These features allow the inspection device to easily and comprehensively determine whether a filler device has any visually recognizable abnormality.

The description below deals with preferable embodiments of the present invention. The preferable embodiments described below as examples do not limit the scope of the present invention.

An inspection device as a preferable embodiment of the present invention is configured such that the plurality of filler machines are movable in a height direction, and the image capture device is moveable in the height direction.

The above configuration allows the filler machines and the image capture device to be fixed in position relative to each other, and thereby allows image data obtained to be fixed in the angle of view, even if the filler machines are movable in correspondence with different types of containers with respective capacities.

An inspection device according to the present invention is configured such that the plurality of filler machines are assigned with respective identification numbers, and the image capture control device, based on the coordinate data, causes the image capture device to first capture an image of a filler machine among the plurality of filler machines that is assigned with a predetermined identification number among the identification numbers to generate a first piece of image data, and then capture images of filler machines among the plurality of filler machines that are assigned with other identification numbers among the identification numbers to generate a plurality of pieces of image data.

The above configuration allows the image capture device to generate a series of pieces of image data arranged based on the respective identification numbers of the filler machines. This facilitates management of the inspection results.

An inspection device as a preferable embodiment of the present invention further includes: a box containing the image capture device; and an air supply source configured to supply air into the box.

The above configuration allows air to be supplied into the box containing the image capture device to prevent the image capture device from being surrounded by steam. This protects the inspection device if the inspection device is in a high-temperature, high-humidity environment.

An inspection device as a preferable embodiment of the present invention is configured such that the box has an attachable and detachable face portion inside an image capture area of the image capture device.

If the image capture device is enclosed in a box on all sides, the image capture device may generate image data with impaired quality even if the box is made of a transparent material. The above configuration allows a face portion inside the image capture area to be detached for the image capture device to capture an image. This prevents the image capture device from generating image data with quality impaired by the box.

Additional features and advantages of the present invention will be made clearer by the description of the exemplary and non-limiting embodiments below, which are described with reference to the drawings.

### Brief Description of Drawings

Fig. 1 is a diagram illustrating the layout of a filler device for an embodiment.
Fig. 2 is a perspective view of filler machines and an inspection device for an embodiment.
Fig. 3 is a block diagram illustrating a filler device and an inspection device for an embodiment.
Fig. 4 is a diagram illustrating example image data for an embodiment.
Fig. 5 is a diagram illustrating example image data for an embodiment.

### Description of Embodiments

The description below deals with an inspection device as an embodiment of the present invention with reference to drawings. The description below deals with, as an example of the inspection device according to the present invention, an inspection device 1 for use to inspect a filler device 100 for filling cans with beverage liquid.

### Configuration of Filler Device

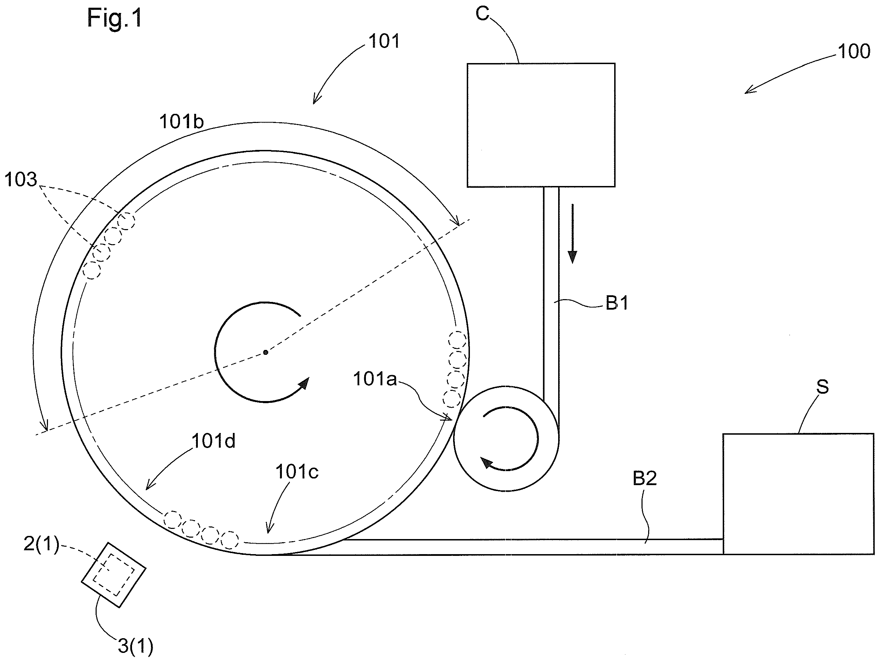

The description below deals first with the filler device 100, for which the inspection device 1 as the present embodiment is used, before dealing with the inspection device 1 itself. As illustrated in Figs. 1 to 3, the filler device 100 includes a rotor 101, a filling control device 102, and a plurality of filler machines 103. The rotor 101 is circular, and is drivable to rotate. The filling control device 102 is configured to control how the rotor 101 is driven. The filler machines 103 are arranged along the perimeter of the rotor 101.

With the filler device 100 in operation, the rotor 101 rotates continuously, which in turn causes the filler machines 103 to revolve continuously. Through a complete revolution along the track, the filler machines 103 each sequentially receive an empty can from the preceding step, fill the can with beverage liquid, and transfer the filled can to the next step. Specifically, as illustrated in Fig. 1, the filler machines 103 each receive at a receiving position 101a an empty can conveyed by a conveyor B1 from the preceding step (for example, an empty can washer C). The filler machine 103 then fills the can with beverage liquid through a filling segment 101b. After that, the filler machine 103 transfers at a transfer position 101c the filled can to a conveyor B2 to convey the can to the next step (for example, a can seaming facility S). The track also has an inspection position 101d. The inspection device 1 includes image capture devices 2 each so positioned and oriented as to capture an image of the filler machine 103 at the inspection position 101d.

The rotor 101 is a circular member drivable by a motor (not shown) to rotate and having a perimeter along which a plurality of filler machines 103 are arranged. The rotor 101 is operated (that is, the motor is driven or stopped) under control of the filling control device 102. The rotor 101 is electrically connected to the filling control device 102.

The filling control device 102 is in the form of a publicly known computer. The filling control device 102 is configured to transmit to the rotor 101 an electric signal for controlling how the rotor 101 is operated (that is, how the motor is driven and stopped). The filling control device 102 is also configured to determine the rotating coordinates of the rotor 101 and output the rotating coordinates as coordinate data to the image capture control device 5 of the inspection device 1. The filling control device 102 is configured as such with use of, for example, an encoder (not shown) provided for the rotor 101.

The filler machines 103 are, as illustrated in Fig. 1, arranged along the perimeter of the rotor 101 at equal intervals. The present embodiment includes 164 filler machines 103 assigned sequentially with identification numbers 1 to 164. The filler machines 103 are each electrically connected to the filling control device 102 and operated under control thereof with use of its electric signal.

The filling control device 102 is configured to, based on the rotating coordinates of the rotor 101, determine the respective points on the rotating coordinates that correspond to the filler machines 103. The filling control device 102 then opens the valve of each filler machine 103 in the filling segment 101b to fill the corresponding can with beverage liquid. The filling control device 102 also outputs the rotating coordinates of the filler machines 103 as coordinate data to the image capture control device 5.

The filler machines 103 are each movable in the height direction. The filler device 100 as the present embodiment is configured to charge beverage liquid into cans with different capacities (for example, 330 mL, 350 mL, and 500 mL); specifically, the filler device 100 is configured to receive two or more types of empty cans with different capacities and heightwise measurements by moving the filler machines 103 to different heights corresponding to such heightwise measurements. The filler machines 103 are each moved to different heights in response to an electric signal from the filling control device 102. The filling control device 102 is configured to obtain information on the respective heights of the filler machines 103 and output the information to the image capture control device 5.

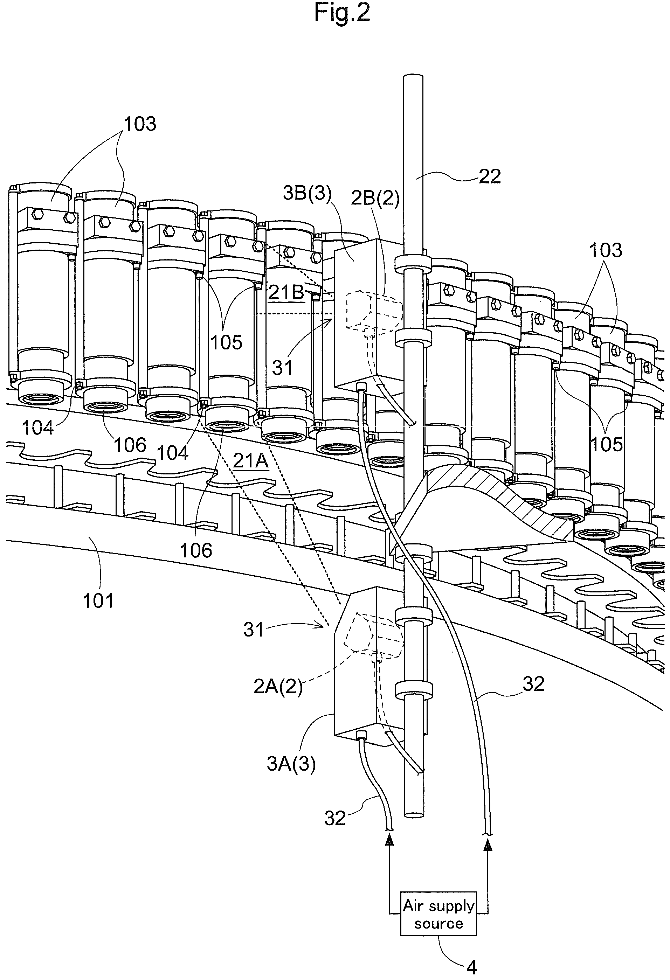

The filler device 100 is composed of different parts, some of which are managed as important management targets to prevent foreign objects from entering canned beverages produced. The important management targets have a particularly high risk of entering canned beverages. The filler machines 103, as illustrated in Fig. 2, each include a nut 104 for fixing a member at the tip, a cap screw 105 for fixing a cylindrical part, and a gasket 106 configured to come into contact with an empty can when filling the empty can with beverage liquid. The nuts 104, the cap screws 105, and the gaskets 106 are important management targets for the filler machines 103. The important management targets, which include the nuts 104, the cap screws 105, and the gaskets 106, are all checked every day.

### Configuration of Inspection Device

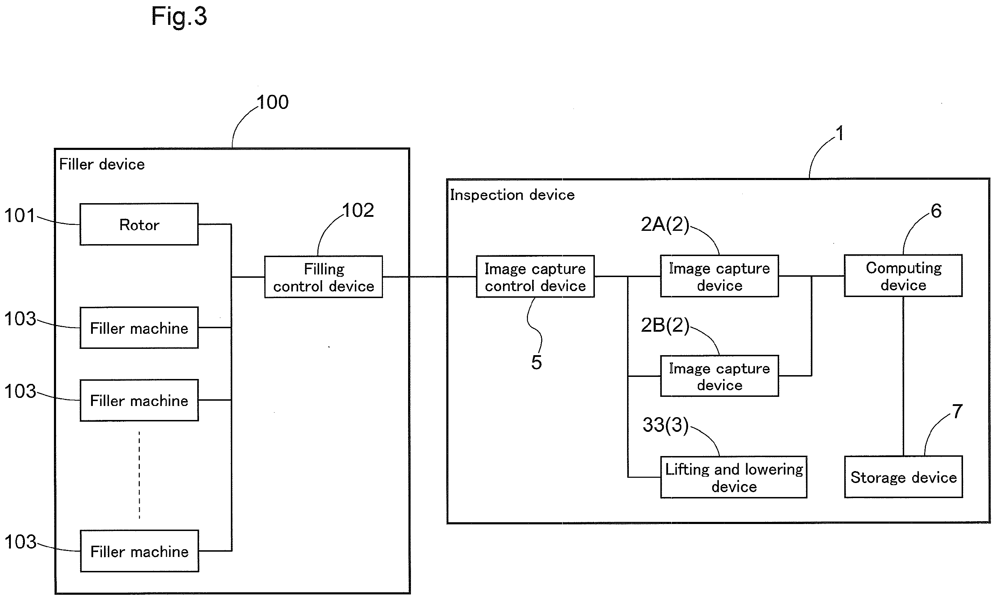

The inspection device 1 as the present embodiment is configured to inspect the filler device 100. The inspection device 1, in particular, facilitates checking all the nuts 104, cap screws 105, and gaskets 106. As illustrated in Figs. 2 and 3, the inspection device 1 includes two image capture devices 2, two boxes 3, an air supply source 4, an image capture control device 5, a computing device 6, and a storage device 7.

The image capture devices 2 are each configured to capture an image of the filler machine 103 at the inspection position 101d to generate image data and output the image data to the computing device 6. The image capture devices 2 are, specifically, each in the form of a publicly known digital camera. The image capture devices 2 each generate image data (that is, capture an image) at a time point that depends on an electric signal from the image capture control device 5. The image capture devices 2 are each contained in a box 3.

The boxes 3 may each be composed of face portions made of any material durable in a high-temperature, high-humidity environment, preferably composed of transparent plates made of rigid polyvinyl chloride. The expression "high-temperature, high-humidity environment" refers to a common sterilization environment in the technical field of filler devices. The boxes 3 are required to endure high temperature and humidity when the room containing the boxes 3 has received high-temperature steam for sterilization of all the equipment including the filler device 100. The boxes 3 may each have any shape that does not prevent the corresponding image capture device 2 from capturing an image of a filler machine 103.

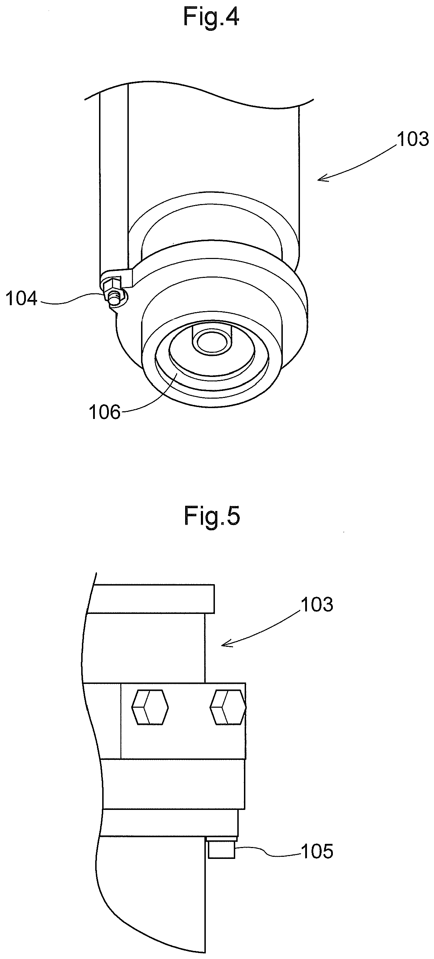

The present embodiment includes two image capture devices 2A and 2B and two boxes 3A and 3B corresponding thereto respectively. The image capture device 2A is contained in the box 3A, and faces obliquely upward as illustrated in Fig. 4 to have an image capture area 21A that covers the nut 104 and gasket 106 of a filler machine 103. The image capture device 2B is contained in the box 3B, and faces horizontally as illustrated in Fig. 5 to have an image capture area 21B that covers the cap screw 105 of a filler machine 103. That face portion 31 of each box 3 among its face portions which is inside the corresponding image capture area 21 is attachable and detachable: Before inspection of the filler device 100, the face portion 31 is detached so that no object is present between the corresponding image capture device 2 and a filler machine 103. This allows the image capture device 2 to obtain image data as a result of capturing a clear image of a filler machine 103 (in particular, its nut 104, cap screw 105, and gasket 106) without being affected by, for example, light reflected by the face portion 31 or foreign matter on the face portion 31.

The boxes 3 each include a bottom face provided with an air supply tube 32 connected with the air supply source 4 and configured to supply air into the box 3. The air supplied escapes from the box 3 through a gap around the face portion 31 as attached or an opening resulting from detaching the face portion 31. This allows fresh air to flow around the corresponding image capture device 2.

The image capture devices 2 and the boxes 3 are movable in the height direction. The filler machines 103 are selectively positionable at either one of two heights corresponding to the respective capacities of the types of cans to be filled with beverage liquid. The image capture devices 2 and the boxes 3 are, accordingly, also selectively positionable at either one of two heights so that the image capture devices 2 each have an image capture area that covers a filler machine 103 at either of the two heights. The inspection device 1 may include, as a specific example, a publicly known lifting and lowering device 33 drivable on, for example, air pressure, hydraulic pressure, or electricity to move the image capture devices 2 and the boxes 3 in the height direction. The lifting and lowering device 33 may be controlled by the image capture control device 5.

More specifically, the image capture device 2A and the box 3A are fixed to a lower portion of a vertical holder 22 and the image capture device 2B and the box 3B are fixed to an upper portion of the vertical holder 22. The holder 22 is connected with the lifting and lowering device 33 to be movable in the height direction. The image capture devices 2A and 2B are fixed in position relative to each other regardless of the holder 22 being lifted or lowered. This is consistent with the fact that the nut 104, cap screw 105, and gasket 106 of a filler machine 103 are fixed in position relative to one another regardless of the height of the filler machine 103. The image capture device 2A has an image capture area 21A that covers the nut 104 and the gasket 106, whereas the image capture device 2B has an image capture area 21B that covers the cap screw 105, regardless of the height selected of the filler machine 103.

The air supply source 4 may be an industrially common one. The air supply source 4 may be, for example, a dedicated air compressor or pump, or may be in the form of an air supply utility of the factory in which the filler device 100 is installed. The air supply source 4 is preferably configured to control at least either, more preferably both, of the temperature and humidity of air to be supplied. The air supply source 4 may thus be equipped with either or both of a temperature adjustment device and a humidity adjustment device.

As described above, the room containing the filler device 100 may receive high-temperature steam for sterilization of all the equipment including the filler device 100, so that the internal air has a high temperature and a high humidity. Such a high-temperature, high-humidity environment may break down electronic components included in each image capture device 2 (such as a digital camera). This is the reason why the present embodiment includes the boxes 3 and the air supply source 4 to constantly cause fresh air to flow around each image capture device 2 with the face portion 31 attached and thereby prevent the image capture devices 2 from being exposed to the high-temperature, high-humidity environment.

The boxes 3 and the air supply source 4 serve to protect the image capture devices 2 regardless of the environment outside the boxes 3. The boxes 3 should, in particular, preferably be each configured to have a positive internal pressure to prevent a fluid from entering the boxes 3. The boxes 3 may each have a positive internal pressure with, for instance, the air supply source 4 set to supply air with a pressure higher than atmospheric pressure.

The image capture control device 5 is in the form of a publicly known programmable logic controller (PLC) configured to control the image capture devices 2. The image capture control device 5 is, specifically, configured to perform an image capture control function, which is a function of selecting when the image capture devices 2 will each generate image data (that is, capture an image), and a height control function, which is a function of specifying the respective heights of the image capture devices 2 and the boxes 3 for the lifting and lowering device 33.

The image capture control function is a function of selecting, based on coordinate data on the filler machines 103 (which is an example of the "coordinate data on rotating coordinates of the rotor") from the filling control device 102, a time point at which each image capture device 2 is to generate image data. While performing the image capture control function, the image capture control device 5 transmits an electric signal to each image capture device 2 to cause the image capture device 2 to capture an image of a filler machine 103 when the filler machine 103 is at the inspection position 101d. The image capture control device 5 operates as such for all the filler machines 103, so that the image capture devices 2 generate image data on all the filler machines 103 while the rotor 101 completes a single rotation.

More specifically, the image capture control device 5 first causes each image capture device 2 to generate image data as a result of capturing an image of the filler machine 103 with identification number 1 (which is an example of the "predetermined identification number") when the filler machine 103 is at the inspection position 101d. The image capture devices 2A and 2B simultaneously generate two respective pieces of image data on the filler machine 103 with identification number 1. The description below uses the term "image data pair" to refer to the pair of such two pieces of image data.

The image capture control device 5 then causes the image capture devices 2 to sequentially generate image data pairs on the filler machines 103 with identification numbers 2 and later (which is an example of the "other identification numbers"). The image capture devices 2 thereby generate a group of image data pairs including an image data pair on the filler machine 103 with identification number 1 at the head and other image data pairs on the filler machines 103 with identification numbers 2 and later as arranged by identification number. The image capture devices 2 generate a group of image data pairs arranged based on the respective identification numbers of the filler machines 103 as described above. This facilitates management of the inspection results. The generated group of image data pairs are stored in the storage device 7.

The height control function is a function of controlling the lifting and lowering device 33 based on information on the respective heights of the filler machines 103 from the filling control device 102 to move the image capture devices 2 (and the boxes 3) in the height direction. More specifically, the lifting and lowering device 33 moves the image capture devices 2 to the smaller one of its two selective heights when the filler machines 103 are at the smaller one of its two selective heights and to the larger height when the filler machines 103 are at the larger height. This allows the filler machines 103 and the image capture devices 2 to be fixed in position relative to each other, and thereby allows image data obtained to be fixed in the angle of view, regardless of the respective heights of the filler machines 103.

The computing device 6 is in the form of a publicly known computer. The storage device 7 is in the form of a publicly known one configured to store electronic data (such as a hard disk drive or a solid-state drive). The computing device 6 is configured to perform an inspection function, which is a function of inspecting the filler device 100, based on image data that the image capture devices 2 have generated. The inspection function is, specifically, a function of inspecting, based on image data, whether the nut 104, the cap screw 105, and the gasket 106 have any abnormality. Example abnormalities include visually recognizable ones such as a loss of a component or a sign of its possibility (such as loosening), adherence of foreign matter, and discoloring. The storage device 7 is configured to store image data generated and other necessary information.

### Inspection Function in Detail

Performing the inspection function is preceded by preparation of training data group including a plurality of pieces of image data that are among the group of pieces of image data generated previously and accumulated in the storage device 7 and that are each labeled as a normal state (that is, the nut 104, the cap screw 105, and the gasket 106 are all normal) or an abnormal state (that is, at least one of the nut 104, the cap screw 105, and the gasket 106 is abnormal). The plurality of pieces of image data may each be labeled as a normal state or an abnormal state through the user interface of the computing device 6 or with use of another computer. The training data group should preferably include at least one piece of training data indicative of the normal state and at least one piece of training data indicative of the abnormal state.

The inspection device 1 as the present embodiment inspects the filler device 100 with use of two pieces of image data (that is, an image data pair) that the image capture devices 2 generate simultaneously on a single filler machine 103. Image data that the image capture device 2A has generated (see Fig. 4; hereinafter referred to as "first image data") is labeled based on whether the nut 104 or the gasket 106 has an abnormality, whereas image data that the image capture device 2B generates (see Fig. 5; hereinafter referred to as "second image data") is labeled based on whether the cap screw 105 has an abnormality.

First image data may be labeled based separately on whether the nut 104 has an abnormality and whether the gasket 106 has an abnormality. In this case, first image data may be labeled as a normal state (that is, the nut 104 and the gasket 106 are both in a normal state), a first abnormal state (that is, the nut 104 has an abnormality, whereas the gasket 106 is in a normal state), a second abnormal state (that is, the nut 104 is in a normal state, whereas the gasket 106 has an abnormality), or a third abnormal state (that is, the nut 104 and the gasket 106 both have an abnormality). The description below assumes this labeling system.

The inspection function that the computing device 6 performs includes a learning step, an obtaining step, and a determining step.

The learning step is a step of constructing classifiers from a training data group with use of a publicly known algorithm for constructing a classifier from training data. Example algorithms include a decision tree, a random forest, a support-vector machine, and a neural network. The computing device 6 stores the constructed classifiers in the storage device 7. The computing device 6 for the present embodiment constructs two separate classifiers: a classifier based on first image data and another classifier based on second image data.

The obtaining step is a step of obtaining image data for use in the determining step. Specifically, the computing device 6 obtains image data that the image capture devices 2 have generated. The computing device 6 simultaneously obtains two pieces of image data (that is, an image data pair) generated on a single filler machine 103 as described above.

The determining step is a step of determining, based on the classifiers constructed during the learning step and the image data obtained during the obtaining step, whether the nut 104, the cap screw 105, and the gasket 106 have any abnormality. The computing device 6 uses (i) the classifier constructed from the first image data for determination based on the first image data (see Fig. 4) and (ii) the classifier constructed from the second image data for determination based on the second image data (see Fig. 5). The computing device 6 determines that the filler machine 103 the image data pair on which the computing device 6 has used for the determination is in an abnormal state, in response to determining based at least either on the first image data or on the second image data that the filler machine 103 is in an abnormal state. The computing device 6 determines through the above procedure whether any of the nut 104, cap screw 105, and gasket 106 of the filler machine 103 of interest has any abnormality.

The computing device 6 performs, among the above steps, the obtaining and determining steps for each image data pair. The image capture devices 2 for the present embodiment generate a group of image data pairs including an image data pair on the filler machine 103 with identification number 1 at the head and other image data pairs on the filler machines 103 with identification numbers 2 and later as arranged by identification number. The computing device 6 starts the obtaining and determining steps for an image data pair of the filler machine 103 with identification number 1 and repeats the obtaining and determining steps for subsequent image data pairs in sequence. The computing device 6, in other words, obtains two pieces of image data on each filler machine 103 and performs the above determination with use of the image data. This allows the computing device 6 to determine whether any of the nut 104, the cap screw 105, and the gasket 106 of each filler machine 103 has any abnormality. The computing device 6 determines that the filler device 100 is in (i) a normal state in response to determining that all the filler machines 103 are in the normal state and (ii) an abnormal state in response to determining that at least one of the filler machines 103 is in the abnormal state.

The computing device 6 does not necessarily perform the learning step for each image data; the computing device 6 may perform the learning step before the inspection device 1 as the present embodiment actually starts its operation or on a regular basis. As an example of the latter, the computing device 6 may perform the learning step once a day before the inspection device 1 starts its operation. The computing device 6, in this case, uses image data generated on the previous day to update the classifiers constructed from image data generated by the day before the previous day. This allows the inspection device 1 to have an inspection accuracy that becomes gradually improved through the actual operation. The computing device 6 may update the classifiers once a week, once a month, or once a year, for example. The computing device 6 may perform the learning step for each image data update the classifiers to update the classifiers with use of each image data; however, the computing device 6 may, in that case, have a significant increase in the amount of computation processing.

The inspection function may include between the obtaining and determining steps a manipulating step for manipulating image data into a form suitable for use in the determining step. The manipulating step may involve, for example, adjusting the color tone, contrast, and/or resolution of image data. With the manipulating step included in the inspection function, the computing device 6 manipulates the training data group similarly before constructing classifiers with use of an algorithm. The learning step may further involve selecting a manipulation method that may improve the accuracy of the determining step. The learning step is, in this case, a step of selecting a suitable method of image data manipulation based on a training data group and constructing classifiers from the training data group manipulated by the manipulation method.

### Alternative Embodiments

The description below deals finally with inspection devices as other embodiments of the present invention. The arrangement disclosed for any embodiment below is combinable with the arrangement disclosed for any other embodiment unless such a combination causes any inconvenience.

The embodiment described above is an example in which the image capture devices 2 are each contained in a box 3. The inspection device according to the present invention may alternatively include an image capture device exposed to outside, in which case the box and the air supply source may be omitted. The embodiment described above is an example in which the boxes 3 each include an attachable and detachable face portion 31. The inspection device according to the present invention may alternatively include a box that lacks an attachable and detachable face portion. The box, in this case, needs to include a transparent face so as not to prevent an image capture device from capturing an image.

The embodiment described above is an example in which the image capture devices 2 are movable in the height direction. The image capture devices for the present invention are, however, not necessarily movable in the height direction.

The embodiment described above is an example involving computers and other like devices as the filling control device 102 for the filler device 100 and the image capture control device 5 and computing device 6 for the inspection device 1. The present invention may, however, include a single element or a plurality of elements for performing the function of computation processing and the function of controlling another device. The present invention may, for instance, include a single computer or the like for performing the functions of the image capture control device and computing device for the present invention. The embodiment described above may, for instance, be varied such that the image capture devices 2 each have the computation processing function to perform one or more of the functions that the image capture control device 5 and the computing device 6 perform for the embodiment described above.

It should be understood that with respect to other arrangements as well, the embodiments disclosed herein are illustrative in all respects and do not limit the scope of the present invention. Persons skilled in the art will readily understand that the present invention can be modified as appropriate without departing from the scope of the present invention. The present invention thus naturally covers in its scope any embodiment as modified without departing from the scope of the attached claims.

### Industrial Applicability

The present invention is applicable to, for example, inspection of a filler device for filling cans with beverage liquid.

### Reference Signs List

- 1: Inspection device
- 2: Image capture device
- 3: Box
- 4: Air supply source
- 5: Image capture control device
- 6: Computing device
- 7: Storage device
- 21: Image capture area
- 22: Holder
- 31: Face portion
- 32: Air supply tube
- 33: Lifting and lowering device
- 100: Filler device
- 101: Rotor
- 101a: Receiving position
- 101b: Filling segment
- 101c: Transfer position
- 101d: Inspection position
- 102: Filling control device
- 103: Filler machine
- 104: Nut
- 105: Cap screw
- 106: Gasket

## Claims

1. An inspection device (1) configured to inspect a filler device (100),
the filler device (100) including:
a circular rotor (101) drivable to rotate;
a filling control device (102) configured to control operation of the rotor (101); and
a plurality of filler machines (103) arranged along a perimeter of the rotor (101) and assigned with respective identification numbers,
the inspection device (1) comprising:
two image capture devices (2, 2A, 2B) each configured to capture an image of each of the plurality of filler machines (103) to generate image data;
an image capture control device (5) configured to control the image capture devices; and
a computing device (6) configured to realize an inspection function to inspect the filler device (100) based on the image data, wherein
the image capture control device (5), based on coordinate data on rotating coordinates of the rotor (101) from the filling control device (102), is configured to select a time point at which the image capture devices are to generate the image data,
the image capture control device (5) is configured to, based on the coordinate data, cause the image capture devices to
first capture images of a filler machine (103) among the plurality of filler machines (103) that is assigned with a predetermined identification number among the identification numbers to generate a pair of two pieces of the image data, and
then capture images of filler machines (103) among the plurality of filler machines (103) that are assigned with other identification numbers among the identification numbers to generate a plurality of pairs of two pieces of the image data, thereby generating a group of the pairs of two pieces of the image data arranged based on the respective identification numbers of the filler machines (103).

2. The inspection device (1) according to claim 1, wherein
the plurality of filler machines (103) are movable in a height direction, and
the image capture device (2) is moveable in the height direction.

3. The inspection device (1) according to any one of claims 1 to 2, further comprising:
a box (3) containing each image capture device; and
an air supply source (4) configured to supply air into the box.

4. The inspection device according to claim 3, wherein
the box has an attachable and detachable face portion inside an image capture area of the image capture device.

## Patentansprüche

1. Inspektionsvorrichtung (1), die zum Inspizieren einer Einfüllvorrichtung (100) konfiguriert ist,
wobei die Einfüllvorrichtung (100) aufweist:
einen in Rotation versetzbaren kreisförmigen Rotor (101);
eine Einfüllsteuervorrichtung (102), die konfiguriert ist, um einen Betrieb des Rotors (101) zu steuern; und
mehrere Einfüllmaschinen (103), die entlang eines Umfangs des Rotors (101) angeordnet sind und denen jeweilige Identifikationsnummern zugewiesen sind,
wobei die Inspektionsvorrichtung (1) aufweist:
zwei Bilderfassungsvorrichtungen (2, 2A, 2B), die jeweils konfiguriert sind, um ein Bild jeder der mehreren Einfüllmaschinen (103) zu erfassen, um Bilddaten zu erzeugen;
eine Bilderfassung-Steuervorrichtung (5), die konfiguriert ist, um die Bilderfassungsvorrichtungen zu steuern; und
eine Computervorrichtung (6), die konfiguriert ist, um eine Inspektionsfunktion zu realisieren, um die Einfüllvorrichtung (100) auf Basis der Bilddaten zu inspizieren, wobei
die Bilderfassung-Steuervorrichtung (5) auf Basis von Koordinatendaten an rotierenden Koordinaten des Rotors (101) aus der Einfüllsteuervorrichtung (102) konfiguriert ist, einen Zeitpunkt zu wählen, zu dem die Bilderfassungsvorrichtungen die Bilddaten erzeugen sollen,
die Bilderfassung-Steuervorrichtung (5) konfiguriert ist, um auf Basis der Koordinatendaten die Bilderfassungsvorrichtungen zu veranlassen,
zuerst Bilder einer Einfüllmaschine (103) der mehreren Einfüllmaschinen (103), der eine vorgegebene Identifikationsnummer unter den Identifikationsnummern zugewiesen ist, zu erfassen, um ein Paar zweier Teile der Bilddaten zu erzeugen, und
dann Bilder von Einfüllmaschinen (103) der mehreren Einfüllmaschinen (103), denen andere Identifikationsnummern unter den Identifikationsnummern zugewiesen sind, zu erfassen, um mehrere Paare zweier Teile der Bilddaten zu erzeugen, um dadurch eine Gruppe der Paare zweier Teile der Bilddaten zu erzeugen, die auf Basis der jeweiligen Identifikationsnummern der Einfüllmaschinen (103) angeordnet sind.

2. Inspektionsvorrichtung (1) nach Anspruch 1, wobei
die mehreren Einfüllmaschinen (103) in Richtung einer Höhe bewegbar sind, und
die Bilderfassungsvorrichtung (2) in Richtung der Höhe bewegbar ist.

3. Inspektionsvorrichtung (1) nach einem der Ansprüche 1 bis 2, ferner aufweisend:
einen Kasten (3), der die jeweilige Bilderfassungsvorrichtung enthält; und
eine Lufteinspeisungsquelle (4), die konfiguriert ist, um Luft in den Kasten einzuspeisen.

4. Inspektionsvorrichtung (1) nach Anspruch 3, wobei
der Kasten einen anbringbaren und abnehmbaren Vorderabschnitt innerhalb eines Bilderfassungsbereichs der Bilderfassungsvorrichtung hat.

## Revendications

1. Dispositif d'inspection (1) configuré pour inspecter un dispositif de remplissage (100),
le dispositif de remplissage (100) incluant:
un rotor circulaire (101) pouvant être entraîné en rotation;
un dispositif de commande de remplissage (102) configuré pour commander le fonctionnement du rotor (101); et
une pluralité de machines de remplissage (103) agencées le long d'un périmètre du rotor (101) et auxquelles des numéros d'identification respectifs sont attribués,
le dispositif d'inspection (1) comprenant:
deux dispositifs de capture d'image (2, 2A, 2B) configurés chacun pour capturer une image de chacune de la pluralité de machines de remplissage (103) pour générer des données d'image;
un dispositif de commande de capture d'image (5) configuré pour commander les dispositifs de capture d'image; et
un dispositif de calcul (6) configuré pour réaliser une fonction d'inspection pour inspecter le dispositif de remplissage (100) sur la base des données d'image, dans lequel
le dispositif de commande de capture d'image (5), sur la base de données de coordonnées sur des coordonnées de rotation du rotor (101) provenant du dispositif de commande de remplissage (102), est configuré pour sélectionner un point temporel auquel les dispositifs de capture d'image doivent générer les données d'image,
le dispositif de commande de capture d'image (5) est configuré pour, sur la base des données de coordonnées, amener les dispositifs de capture d'image à
d'abord capturer des images d'une machine de remplissage (103) parmi la pluralité de machines de remplissage (103) à laquelle est attribué un numéro d'identification prédéterminé parmi les numéros d'identification pour générer une paire de deux éléments des données d'image, et
ensuite capturer des images de machines de remplissage (103) parmi la pluralité de machines de remplissage (103) auxquelles sont attribués d'autres numéros d'identification parmi les numéros d'identification pour générer une pluralité de paires de deux éléments des données d'image, générant ainsi un groupe des paires de deux éléments des données d'image agencées sur la base des numéros d'identification respectifs des machines de remplissage (103).

2. Dispositif d'inspection (1) selon la revendication 1, dans lequel
la pluralité de machines de remplissage (103) sont mobiles dans une direction de la hauteur, et
le dispositif de capture d'image (2) est mobile dans la direction de la hauteur.

3. Dispositif d'inspection (1) selon l'une quelconque des revendications 1 à 2, comprenant en outre:
un boîtier (3) contenant chaque dispositif de capture d'image; et
une source d'alimentation en air (4) configurée pour alimenter le boîtier en air.

4. Dispositif d'inspection selon la revendication 3, dans lequel
le boîtier a une partie frontale pouvant être fixée et retirée à l'intérieur d'une zone de capture d'image du dispositif de capture d'image.
